# EUROPÄISCHE PATENTSCHRIFT

(11) **EP 3 807 197 B1**
(45) Veröffentlichungstag und Bekanntmachung des Hinweises auf die Patenterteilung: **03.12.2025**
(21) Anmeldenummer: 19711874.8
(22) Anmeldetag: 14.03.2019
(51) Int. Cl.: B65G 54/02, H02K 41/03, H02K 5/10

(54) **MOVER FÜR EINE TRANSPORTVORRICHTUNG**
MOVER FOR A TRANSPORT APPARATUS
APPAREIL MOTEUR POUR UN DISPOSITIF DE TRANSPORT

(30) Priorität: 15.06.2018 DE 102018209727
(43) Veröffentlichungstag der Anmeldung: 21.04.2021
(73) Patentinhaber: Krones AG, 93073 Neutraubling (DE)
(72) Erfinder: KIESLINGER, Manfred, 93073 Neutraubling (DE); ELSPERGER, Stefan, 93073 Neutraubling (DE)
(74) Vertreter: Grünecker Patent- und Rechtsanwälte PartG mbB
(86) Internationale Anmeldenummer: PCT/EP2019/056395
(87) Internationale Veröffentlichungsnummer: WO 2019/238283

(56) Entgegenhaltungen:
- EP-A1- 3 422 562
- WO-A1-2017/108423
- DE-A1- 102014 118 335
- DE-U1- 202010 002 447
- JP-A- H03 169 253
- JP-A- S60 113 651
- JP-U- S5 594 176
- JP-U- S62 115 780
- US-A1- 2011 100 252
- US-B2- 8 922 068

## Beschreibung

Die vorliegende Erfindung betrifft einen Mover für eine Transportvorrichtung in der getränkeverarbeitenden Industrie, der Verpackungsindustrie oder der Lagerindustrie gemäß Oberbegriff des Anspruchs 1 und ein Verfahren zum Einstellen der relativen Lage von Sekundärteilen eines Movers gemäß Oberbegriff des Anspruchs 6.

### Stand der Technik

In der getränkeverarbeitenden Industrie, der Verpackungsindustrie oder der Lagerindustrie werden Mover oder auch Shuttles bereits in Transportvorrichtungen zum Transport von Behältern, wie Flaschen aus Kunststoff, Lebensmittel wie Müsliriegel, Kekse oder Verpackungen derselben oder auch andere Verpackungen wie Kartonagen, aber auch Pakete oder Bauteile, welche in ein (Hochregal-)Lager eingelagert werden, eingesetzt. Dazu werden die Mover oder Shuttles üblicherweise in Verbindung mit einem Langstator und einer Führungsschiene verwendet. Die Führungsschiene, der Langstator und der Mover sind dabei so ausgebildet, dass sie gemeinsam einen Linearantrieb bilden, in der Form, dass der Langstator ausgebildet ist, ein elektromagnetisches Feld zu erzeugen, das mit dem Mover derart wechselwirkt, dass der Mover entlang der Führungsschiene der Transportvorrichtung geführt bewegt werden kann.

Zu diesem Zweck umfasst der Mover bekanntermaßen auf einer oder auf beiden Seiten sogenannte "Sekundärteile", die aus einem Material bestehen, das mit dem elektromagnetischen Feld wechselwirken kann. Die Sekundärteile sind, bei Anordnung des Movers an der Führungsschiene, typischerweise durch einen Luftspalt von dem Langstator getrennt. Die Größe des Luftspalts kann also als Maß für den Abstand des Sekundärteils von Führungsschiene bzw. dem Langstator gesehen werden und bestimmt daher unmittelbar die auf das Sekundärteil einwirkenden Kräfte.

Je nach Anwendung kann es erforderlich sein, die Sekundärteilkräfte sehr präzise einzustellen, um die Funktion bzw. Reproduzierbarkeit zu gewährleisten. Bisher wurde das durch enge Toleranzen bei sämtlichen relevanten Fertigungsteilen des Movers oder des Transportwagens erreicht. Ein Nachteil, der sich ergibt, sind hohe Fertigungsaufwände bzw. Fertigungskosten, da die Toleranzen eng ausgelegt werden müssen und sich trotzdem die Einzeltoleranzen Aufsummieren und hohe Summentoleranzen ergeben welche ebenfalls zu Problemen führen.

Eine andere gängige Maßnahme ist das Ausdistanzieren des Luftspalts mittels Unterlegscheiben. Dieses Verfahren ist zwar genau, aber relativ arbeitsaufwändig, da für jede Korrektur das Sekundärteil demontiert und ein Distanzstück untergelegt werden muss. Das Dokument WO 2017/108423 A1 offenbart die Merkmale des Oberbegriffs der Ansprüche 1 und 6.

### Aufgabe

Ausgehend vom bekannten Stand der Technik besteht die zu lösende technische Aufgabe somit darin, einen Mover und ein Verfahren zum Einstellen der relativen Lage von Sekundärteilen des Movers zum Grundkörper des Movers anzugeben, die eine vereinfachte aber gleichzeitig hochgenaue Einstellung der Position der Sekundärteile relativ zum Grundkörper des Movers bevorzugt im Mikrometerbereich ermöglichen, um beispielsweise die Größe des Luftspalts und/oder die auf die Sekundärteile einwirkenden Kräfte genau einstellen zu können.

### Lösung

Diese Aufgabe wird erfindungsgemäß durch den Mover für eine Transportvorrichtung gemäß Anspruch 1 und das Verfahren zum Einstellen der relativen Lage von Sekundärteilen eines Movers gemäß Anspruch 6 gelöst. Vorteilhafte Weiterbildungen der Erfindung sind in den Unteransprüchen erfasst.

Der erfindungsgemäße Mover für eine Transportvorrichtung in der getränkeverarbeitenden Industrie, der Verpackungsindustrie oder der Lagerindustrie ist ausgebildet, zusammen mit einer Führungsschiene und einem Langstator der Transportvorrichtung einen Linearantrieb zu bilden, wobei der Mover Rollmittel zum Bewegen entlang der Führungsschiene umfasst und wobei der Mover einen Grundkörper und zwei Sekundärteile umfassen kann, die an gegenüberliegenden Seiten des Grundkörpers angeordnet sind und geeignet sind, zum Antrieb des Movers entlang der Führungsschiene mittels des Langstators mit einem von der Transportvorrichtung erzeugten elektromagnetischen Feld zu wechselwirken und ist dadurch gekennzeichnet, dass der Mover Mittel zur stufenlosen Einstellung der relativen Lage eines Sekundärteils zum Grundkörper umfasst.

Unter dem Grundkörper des Movers ist eine Art tragende Struktur zu verstehen, an der zumindest die Rollmittel und die Sekundärelemente befestigt sein können. Die Befestigung kann dabei lösbar oder fest in dem Sinne, dass sie nicht zerstörungsfrei beendet werden kann, vorgesehen sein. Der Langstator kann als Teil der Führungsschiene aber auch als separates Bauteil vorgesehen sein und umfasst im wesentlichen Elektromagneten oder andere zum Erzeugen eines elektromagnetischen Feldes ausgebildete Bauteile.

Die Rollmittel sind aus dem Stand der Technik bereits bekannte Gruppen von Rollen, wobei der Mover üblicherweise mehrere Rollen umfasst, so dass er durch die Rollen an der Führungsschiene gehalten werden kann, ohne unter seinem Eigengewicht und möglichen Zusatzlasten von der Führungsschiene herunter zu fallen und gleichzeitig eine möglichst reibungsarme Bewegung entlang der Führungsschiene möglich ist. Alternativ zu Rollen können hier auch Kufen oder andere gleitfähige Einrichtungen Verwendung finden.

Die Ausbildung der Sekundärteile derart, dass sie zum Antrieb des Movers entlang des Langstators mit einem von der Transportvorrichtung erzeugten elektromagnetischen Feld wechselwirken können, ist dabei so zu verstehen, dass die Sekundärteile aus einem elektrisch leitfähigen Material bestehen bzw. dieses umfassen und/oder magnetisierbar sind, so dass sie im elektromagnetischen Feld, das von der Transportvorrichtung (insbesondere der Führungsschiene) erzeugt wird, eine Kraft erfahren, die den Mover in die angestrebte Richtung der Bewegung beschleunigt. Beispielsweise kommen hier Eisenkerne oder Legierungen für die Sekundärteile in Betracht. Es kann sich hier jedoch auch um Permanentmagnete handeln, die mit einem hervorgerufenen zeitlich abhängigen elektrischen Feld in Wechselwirkung treten und in diesem eine Lorentzkraft erfahren. Die stufenlose Einstellung der relativen Lage wenigstens eines Sekundärteils zum Grundkörper mit Hilfe der Mittel für diese stufenlose Einstellung ist so zu verstehen, dass im Prinzip eine beliebig feine Einstellung der relativen Lage des Sekundärteils zum Grundkörper mit diesen Mitteln möglich ist. Insbesondere ist diese Einstellung im Submillimeter- bis in den Mikrometerbereich hinein exakt durchführbar, um eine möglichst genaue Anordnung der Sekundärteile im Grundkörper zu ermöglichen.

Die stufenlose Einstellung bietet den Vorteil, dass sehr exakt auf Schwankungen des elektromagnetischen Felds und insbesondere die Ortsabhängigkeit des elektromagnetischen Feldes außerhalb des Langstators reagiert werden kann. Ist das elektromagnetische Feld einmal ausgemessen, kann die Lage des Sekundärteils zum Grundkörper so eingestellt und fixiert werden, dass stets eine exakt gewünschte Positionierung des Sekundärteils in dem erzeugten elektromagnetischen Feld gewährleistet ist und somit auch die auf das Sekundärteil und damit den Mover einwirkende Lorentzkraft, die letztlich die Beschleunigung des Movers bestimmt, genau festgelegt werden kann. Dies wiederum ermöglicht eine exakte Steuerung der Bewegung des Movers. Diese Ausführung kann insbesondere im Bereich von Weichen, in denen der Mover üblicherweise von einem ersten Langstator mit Führungsschiene optional auf einen benachbarten, zweiten Langstator mit Führungsschiene wechselt, von Vorteil sein, da gerade in diesem Bereich eine genaue Einstellung der auf den Mover einwirkenden Kräfte erforderlich ist, um den Wechsel von dem ersten auf den zweiten Langstator und die entsprechenden Führungsschienen durchzuführen.

Erfindungsgemäß ist vorgesehen, dass erste Mittel zur Einstellung der relativen Lage eines ersten Sekundärteils zum Grundkörper und zweite Mittel zur Einstellung der relativen Lage eines zweiten Sekundärteils zum Grundkörper vorgesehen sind oder Mittel zur gemeinsamen Einstellung der relativen Lage des ersten und zweiten Sekundärteils zum Grundkörper vorgesehen sind. In der ersten Alternative ist eine Einstellung der relativen Lage jedes Sekundärteils zum Grundkörper unabhängig voneinander möglich. Dies kann insbesondere dann von Vorteil sein, wenn der Mover auch an zwei sich gegenüberliegenden Langstatoren mit Führungsschienen bewegt werden kann. Das Vorsehen eines gemeinsamen Mittels zur Einstellung der relativen Lage vereinfacht die Positionierung der Sekundärteile weiter.

Ferner ist vorgesehen sein, dass die Mittel ein Federelement umfassen, das ein Sekundärteil in einer Ausgangslage und in einer Richtung bezüglich des Grundkörpers vorspannt und die Mittel weiterhin eine Stellschraube in einem Gewinde umfassen, wobei durch ein Stellen der Stellschraube die Lage des Sekundärteils entlang der Richtung eingestellt werden kann. Die Stellschraube kann, muss aber nicht zwingend parallel zur der Vorspannkraft des Federelements ausgerichtet sein. Da das Federelement das Sekundärteil stets gegen die Stellschraube drückt, kann durch Bewegen der Stellschraube zuverlässig die Position des Sekundärteils eingestellt werden, ohne dass hier Spiel zwischen der Stellschraube und dem Sekundärteil frei wäre.

Es kann vorgesehen sein, dass die Vorspannkraft des beschriebenen Federelements kleiner oder höchstens gleich der Haftreibungskraft zwischen der Stellschraube und dem Gewinde ist. Ein versehentliches Herausdrehen der Stellschraube durch die Vorspannkraft des Federelements kann so vermieden werden.

Weiterhin kann vorgesehen sein, dass die beschriebene Stellschraube und/oder das Gewinde ein Dichtelement umfassen. Das Dichtelement kann als O-Ring oder Ringdichtung ausgebildet sein und dazu genutzt werden, den Innenraum des Gewindes von unbeabsichtigten Verunreinigungen frei zu halten. Auch ein Schutz des Sekundärteils ist so möglich, womit Korrosion verhindert werden kann.

In einer Weiterbildung dieser Ausführungsform ist vorgesehen, dass das Dichtelement das Gewinde und/oder die Stellschraube gegen eine Abdeckung (auch Abdeckplatte genannt) abdichtet. Den Mover von außen benetzende Flüssigkeit kann so effektiv am Eindringen gehindert werden.

In einer Ausführungsform sind die zwei Sekundärteile und die Mittel zur stufenlosen Einstellung der relativen Lage jedes Sekundärteils in einem durch den Grundkörper und einer Abdeckplatte gebildeten Gehäuse angeordnet. Sämtliche Elemente können so vor Verunreinigung und Beschädigung geschützt werden, womit gleichzeitig ein unbeabsichtigtes Verstellen der Lage der Sekundärteile vermieden wird.

Das erfindungsgemäße Verfahren zum Einstellen der relativen Lage von Sekundärteilen eines Movers für eine Transportvorrichtung in der getränkeverarbeitenden Industrie ist dadurch gekennzeichnet, dass die relative Lage eines Sekundärteils zum Grundkörper stufenlos mit an einem Mover angeordneten Mitteln eingestellt wird. Das Einstellen der Lage ist damit ohne Ausbau der Sekundärteile mit hoher Genauigkeit möglich.

Der Mover umfasst dabei erfindungsgemäß zwei Sekundärteile.

Es ist vorgesehen, dass die relative Lage eines ersten und/oder zweiten Sekundärteils zum Grundkörper unabhängig voneinander durch dem ersten Sekundärteil zugeordnete erste Mittel und dem zweiten Sekundärteil zugeordnete zweite Mittel eingestellt wird oder die relative Lage des ersten und/oder zweiten Sekundärteils zum Grundkörper durch ein Mittel zur gemeinsamen Einstellung eingestellt wird. Die erste Variante erlaubt eine hohe Flexibilität mit Hinblick auf die Positionierung der Sekundärteile, wohingegen die zweite Variante ein vereinfachtes Einstellen der Position beider Sekundärteile gleichzeitig ermöglicht.

Erfindungsgemäß ist vorgesehen, dass die Mittel eine Stellschraube in einem Gewinde und ein Federelement, das ein Sekundärteil direkt oder indirekt in einer Ausgangslage relativ zum Grundkörper vorspannt, umfassen und zum Einstellen der relativen Lage die Stellschraube in dem Gewinde gedreht wird, so dass eine Bewegung des Sekundärteils erfolgt.

In einer Ausführungsform ist über eine gesamte Einstellstrecke der Stellschraube die Vorspannkraft des Federelements geringer, als die Haftreibungskraft zwischen dem Gewinde und der Stellschraube. So kann zum einen sicher gestellt werden, dass eine möglichst spielfreie Positionierung des Sekundärteils erreicht wird, wohingegen gleichzeitig ein Lösen der Stellschraube und damit unbeabsichtigtes, falsches Positionieren des Sekundärteils unterbunden wird.

Weiterhin kann vorgesehen sein, dass das Einstellen der relativen Lage jedes Sekundärteils in einer Kraftmessvorrichtung erfolgt, in der weiterhin eine auf jedes Sekundärteil im Mover wirkende elektromagnetische Kraft gemessen wird. Diese Ausführungsform bietet den Vorteil, dass die Einstellung der Lage der Sekundärteile während der Kraftmessung erfolgt und somit die Ergebnisse der Kraftmessung unmittelbar in die Einstellung der Position einfließen können.

### Kurze Beschreibung der Figuren

- Figur 1: zeigt schematisch einen Mover in Seitenansicht mit einem ersten und zweiten Sekundärteil;
- Figuren 2a - d: zeigen Ausführungsformen mit Federelement und Stellschraube;
- Figur 3a: zeigt eine Ausführungsform mit gegeneinander beweglichen Keilen;
- Figuren 3b - c: zeigen nicht beanspruchte Beispiele mit gegeneinander beweglichen Keilen; und
- Figur 4a und b: zeigt einen Mover in einer Kraftmessvorrichtung gemäß verschiedener Ausführungsformen.

### Ausführliche Beschreibung

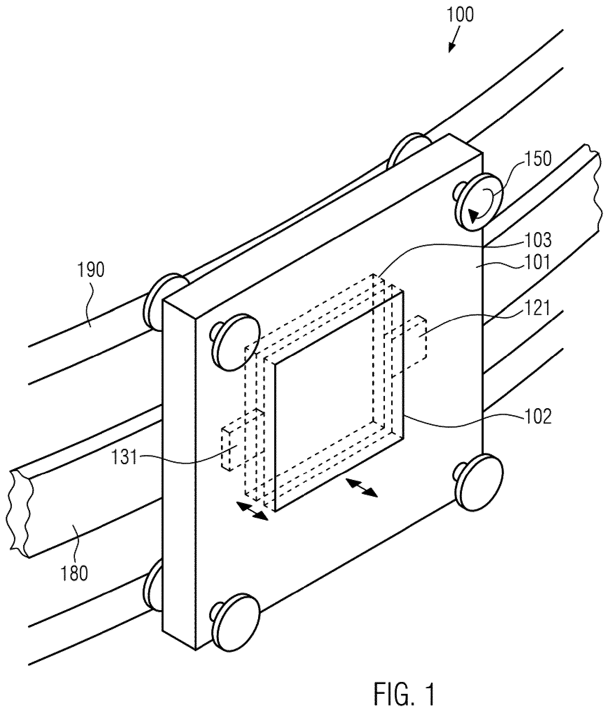

Figur 1 zeigt schematisch einen Mover (auch Shuttle oder Schlitten genannt) 100, der für eine Bewegung entlang einer Transportvorrichtung (hier angedeutet durch eine Führungsschiene 190 und einen Langstator 180 der Transportvorrichtung) ausgelegt ist. Dazu umfasst der Mover 100 üblicherweise mehrere Rollen 150, wobei Rollen auch, wie hier dargestellt, an gegenüberliegenden Seiten des Movers angeordnet sein können. Dazu verfügt der Mover 100 über einen Grundkörper 101, der beispielsweise aus einem Kunststoff oder anderem Material bestehen kann. An diesem sind die Rollen 150 über geeignete Aufhängungen befestigt und drehbar gelagert, so dass sie entlang der Führungsschiene 190 abrollen können. Anstelle von Rollen 150 kommen auch andere "Rollmittel" in Frage, wie beispielsweise Kufen oder andere Flächen, die ein Entlanggleiten des Movers auf der Führungsschiene 190 ermöglichen.

Wenn auch hier nicht dargestellt, können weitere Rollen vorgesehen sein, die beispielsweise auch mit ihrer Rotationsachse senkrecht zu den hier dargestellten Rollen angeordnet sein können und für einen gewissen Abstand zwischen dem Mover und der Führungsschiene 190 sorgen. Solche Ausführungen sind aus dem Stand der Technik bereits bekannt und werden im Folgenden nicht weiter beschrieben.

Die Transportvorrichtung ist erfindungsgemäß als eine Transportvorrichtung gedacht, die für eine Bewegung des Movers 100 zum Transport von Verpackungsmaterial, Gebindetransport oder Behältertransport in einer Behälterbehandlungsanlage in der getränkeverarbeitenden Industrie ausgelegt ist. Der Mover kann jedoch auch in der Verpackungsindustrie, Lagerindustrie oder in der verarbeitenden Industrie als Werkstückträger oder anderer Transporteur Anwendung finden.

Beispielsweise kann sich die Führungsschiene 190 und der Langstator 180 im Falle einer Behälterbehandlungsmaschine durch einen Ofen oder andere Heizeinrichtung zum Erwärmen von Behältern oder Vorformlingen erstrecken. In diesem Fall sind die Mover 100 dann so ausgebildet, dass sie einen Behälterträger umfassen (hier nicht weiter dargestellt), der einen Behälter wie eine Flasche oder eine Dose oder einen Vorformling aufnehmen und fixieren kann, so dass der Behälter mit Hilfe des Movers entlang der Führungsschiene 190 und des Langstators durch die Behälterbehandlungsmaschine transportiert werden kann. Im Folgenden wird lediglich Bezug auf die Führungsschiene genommen. Es versteht sich, dass für die Bewegung des Movers dann auch stets der Langstator vorgesehen ist. Sofern also Bezug auf die Führungsschiene genommen wird, ist dies auch implizit als Bezug auf den Langstator zu verstehen. Dies gilt vor allem, da der Langstator in einigen Ausführungsformen auch in die Führungsschiene integriert sein kann.

Dabei muss der Transport nicht zwingend durch eine Behälterbehandlungsmaschine der Behälterbehandlungsanlage erfolgen. Es kann auch vorgesehen sein, dass das System aus Führungsschiene und Mover lediglich einen Transport zwischen benachbarten Behälterbehandlungsmaschinen ermöglicht. Unter Behälterbehandlungsmaschinen sind Heizeinrichtungen, Streckblasmaschinen, Rinser, Sortiermaschinen, Leerflascheninspektionsmaschinen, Vollflascheninspektionsmaschinen, Füller, Etikettiermaschinen, Verschließer und Verpackungsmaschinen zu verstehen. Der Begriff wird im Folgenden auch synonym für Maschinen verwendet die auch oder vorwiegend im Bereich der Lagerindustrie und/oder der Verpackungsindustrie zum Einsatz kommen können. Sämtliche Ausführungsformen hinsichtlich der Verwendung der Transportvorrichtung sind hier denkbar.

Die Führungsschiene 190 kann wie erwähnt auch als (Lang-)Stator eines Linearantriebs gedacht sein, so dass der Mover 100 erfindungsgemäß Sekundärteile 102 und 103 umfasst, die auf gegenüberliegenden Seiten des Movers angeordnet sind, so dass zumindest eines der Sekundärteile 102 und 103 in Richtung der Führungsschiene 190 weist, wenn der Mover an der Führungsschiene angeordnet ist. Das zweite Sekundärteil weist dann von der Führungsschiene 190 weg bzw. ist auf der Seite des Movers 100 angeordnet, die von der Führungsschiene 190 weg weist. So kann gewährleistet werden, dass der Mover auch an benachbarten Führungsschienen, die sich gegenüberliegen, verwendet werden kann und beispielsweise in einer Weiche von einer Führungsschiene auf die andere Führungsschiene wechseln kann.

Die Sekundärteile 102 und 103 müssen daher so konzipiert sein, dass sie mit dem durch die Führungsschiene (bzw. dem Langstator) erzeugten elektromagnetischen Feld wechselwirken können. Ausführungsformen, bei denen es sich bei den Sekundärteilen um magnetisierbare oder zumindest elektrisch leitfähige Materialien handelt, sind bevorzugt. Beispielsweise kann es sich bei den Sekundärteilen um Eisenkerne, Nickel- oder Kobaltkerne oder Legierungen davon handeln. Alternativ oder zusätzlich können die Sekundärteile auch Permanentmagnete umfassen, die auf ein inhomogenes Magnetfeld oder inhomogenes elektrisches Feld (also räumlich oder zeitlich veränderlich) reagieren.

Grundsätzlich wird der Antrieb durch die auf das Sekundärteil einwirkende Lorentzkraft bestimmt.

Da die auf die Sekundärteile 102 und 103 einwirkende Lorentzkraft stark vom Abstand der Sekundärteile von der Führungsschiene abhängt, da die Feldstärke des elektromagnetischen Feldes ortsabhängig ist, ist erfindungsgemäß vorgesehen, dass die Position der Sekundärteile relativ oder zumindest die Position wenigstens eines der Sekundärteile zum Grundkörper 101 durch Mittel 121 und 131 zum Einstellen der relativen Lage des bzw. der Sekundärteile 102 bzw. 103 stufenlos eingestellt werden kann. Diese stufenlose Einstellung ist für den Normalbetrieb des Movers entlang einer Führungsschiene besonders vorteilhaft und gewinnt noch größere Bedeutung in Weichenanwendungen (Wechsel des Movers von einer ersten auf eine zweite Führungsschiene im Bereich einer Weiche). Bei Weichenanwendungen ist eine möglichst symmetrische Normalkraftverteilung auf den Mover Voraussetzung, so dass der Mover in einer Weiche auf eine zweite Führungsschiene wechselt. Unter Normalkraft versteht man die Kraft, die über den Luftspalt zwischen dem Sekundärteil im Mover und der Führungsschiene (bzw. dem Langstator) übertragen wird. Unter einer Normalkraftverteilung versteht man, dass die Normalkraft auf Sekundärteilen auf beiden Seiten des Movers (also die Sekundärteile 102, 103 oder auf gegenüberliegende Seiten nur eines Sekundärteils, falls nur eines anstelle von zweien vorgesehen ist) gleich groß ist. Im Folgenden wird anstelle von "Mittel zum Einstellen der relativen Lage" auch der Begriff "Mittel" oder "Einstellmittel" verwendet.

Während grundsätzliche die stufenlose Einstellung beider Sekundärteile mit ihnen jeweils zugeordneten Mitteln 121 bzw. 131 möglich ist, kann auch nur ein Mittel 121 zum stufenlosen Einstellen der Lage eines der Sekundärteile vorgesehen sein, wohingegen für das andere Sekundärteil nur eine im Vergleich zur stufenlosen Einstellung der Lage mit dem Mittel 121 grobe Einstellung der Lage, beispielsweise mit Unterlegscheiben vorgesehen ist. Die Unterlegscheiben können Abmessungen im Millimeter-, aber auch im Submillimeterbereich, beispielsweise 0,1 oder 0,2mm besitzen, sodass die Lage des Sekundärteils durch die Unterlegscheiben zwar grob, aber dennoch im Bereich weniger Millimeter oder gar im Submillimeterbereich möglich ist.

Das stufenlose Einstellen hingegen wird dadurch erreicht, dass ein bewegliches Element, das zumindest teilweise die Position des oder der Sekundärteile steuert, in den Einstellmitteln 121 und 131 vorgesehen ist, so dass durch die Bewegung dieses beweglichen Elements eine Einstellung der Lage der Sekundärteile relativ zum Grundkörper 101 erfolgt. Dabei ist vorgesehen, dass dieses bewegliche Element über eine maximale Bewegungsamplitude verfügt, wodurch auch die Extrempunkte der relativen Lage der Sekundärteile bezüglich des Grundkörpers 101 festgelegt sind. Ein erster Extrempunkt kennzeichnet die Lage des Sekundärteils in minimalem Abstand zum Grundkörper und der zweite Extrempunkt die Lage des Sekundärteils in maximalem Abstand zum Grundkörper. Dazwischen, also zwischen diesen Extrempunkten, ist eine beliebige Einstellung der Lage der bzw. des Sekundärteils relativ zum Grundkörper 101 und damit eine stufenlose Einstellung zwischen diesen Extrempunkten möglich. Die Bewegung des Sekundärteils kann bevorzugt in einer eindimensionalen Bewegung von einem Extrempunkt zum anderen Extrempunkt erfolgen.

Dabei ist insbesondere vorgesehen, dass die Position bzw. relative Lage der Sekundärteile relativ zum Grundkörper auf wenige Mikrometer genau, insbesondere wenigstens 10 µm genau, besonders bevorzugt wenigstens 1 µm genau, einstellbar ist.

In der in Figur 1 dargestellten Ausführungsform des Movers und der Sekundärteile 102 und 103 ist vorgesehen, dass die Sekundärteile in lediglich einer Richtung (Doppelpfeile) hin und her bewegt werden können. Je nach Ausführungsform ist jedoch vorgesehen, dass eine Bewegung auch in mehreren Richtungen im Raum und auch Rotationsbewegungen derart, dass ein Verkippen der Sekundärteile 102 und 103 gegenüber einer gewählten Achse möglich sind.

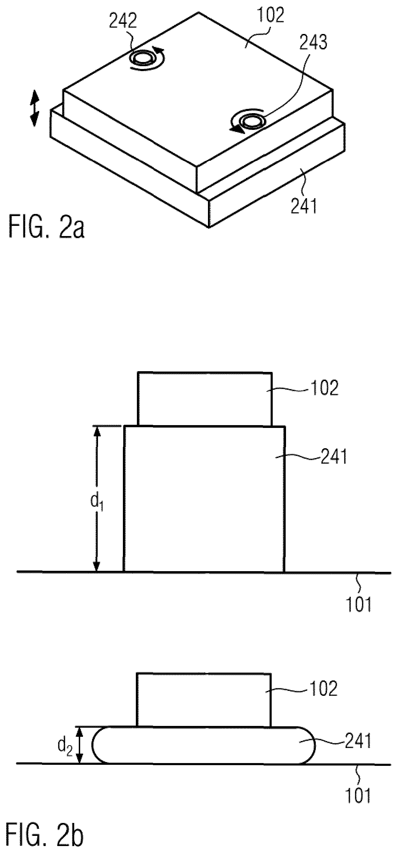

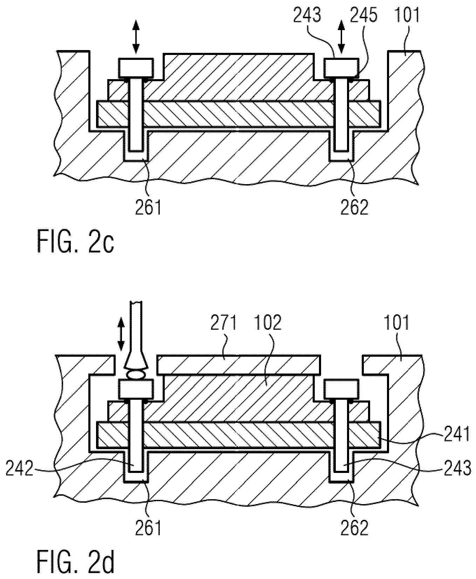

Figur 2 zeigt eine erste Ausführung der Einstellmittel 121 und 131 aus der Figur 1.

In Figur 2a ist hierzu das Sekundärteil zusammen mit dem Einstellmittel losgelöst vom Grundkörper 101 dargestellt. Es versteht sich jedoch, dass die Figur 1 als im Grundkörper eingebettet zu verstehen ist.

Das Einstellmittel gemäß dieser Ausführungsform umfasst ein Federelement 241, auf dem das Sekundärelement 102 positioniert ist. Das Federelement bewirkt eine Vorspannkraft, die das Sekundärelement 102 in eine Ausgangslage vorspannt. Eine genaue Angabe der Position des Sekundärteils in dieser Ausgangslage ist nicht notwendig, bevorzugt entspricht sie jedoch einem der vorhin erwähnten Extremwerte bei der Veränderung der Lage der Sekundärteile, und zwar dem, bei dem der Abstand des Sekundärteils von (der Mitte des) Grundkörpers 101 maximal ist.

Um nun die relative Lage des Sekundärteils 102 bezüglich des Grundkörpers zu verändern, ist in dieser Ausführungsform vorgesehen, dass das Sekundärteil Öffnungen aufweist, durch die Stellschrauben 242 und gegebenenfalls 243 mit einem Gewinde geführt sind. Diese Öffnungen im Sekundärteil 102 können an gegenüberliegenden Kanten des Sekundärteils 102 verlaufen. Es kann auch nur eine Öffnung für eine Schraube vorgesehen sein oder mehrere Öffnungen für mehr als zwei Schrauben. Insbesondere kann vorgesehen sein, dass jeder Ecke des Sekundärteils 102 eine Öffnung für eine entsprechende Stellschraube zugeordnet ist.

In einer abgewandelten Anwendung sind in den Sekundärteilen Gewindebohrungen vorgesehen. In diesem Fall werden die Schrauben von der gegenüberliegenden Mover-Seite verstellt. Um die Stellschrauben von der gegenüberliegenden Seite verstellen zu können, müssen die Gewindebohrungen in den Sekundärteilen versetzt angeordnet werden. Diese abgewandelte Anwendung ist hier nicht dargestellt.

Figur 2b zeigt, wie bereits mit Bezug auf Figur 2a erläutert, die Bewegung des Sekundärelements bezüglich der "Grundfläche" des Grundkörpers 101. Die "Grundfläche" ist dabei die Fläche, in der die Gewinde für das Einschrauben der Schrauben 242 und 243 (also die Gewinde 261 und 262 der Figuren 2c und 2d) eingelassen sind. In der in Fig. 2b oben dargestellten Extremsituation sind die Schrauben nicht eingesetzt oder nur minimal eingesetzt und das Sekundärteil 102 wird allein durch die Vorspannkraft des Federelements 241 in die Ausgangslage mit einem Abstand d₁ zum Grundkörper 101 vorgespannt. Sind die Schrauben 242 und 243 maximal in die Gewinde 261 und 262 eingedreht, ist die Situation unten in Figur 2b erreicht, die den minimalen Abstand d₂ zwischen Sekundärteil 102 und Grundkörper 101 darstellt. Beide Positionen sind natürlich nur schematisch dargestellt und stellen keine realen Größenverhältnisse dar. Erfindungsgemäß kann vorgesehen sein, dass die maximale Bewegungsamplitude des Sekundärteils 0,1 mm bis 1 mm, oder bis zu 3mm beträgt, wobei das Gewinde und die Stellschrauben bevorzugt derart genau gefertigt sind, dass stufenlos eine Veränderung der relativen Lage des Sekundärteils bezüglich des Grundkörpers im Submillimeter-, besonders bevorzugt im Mikrometerbereich bis hin zu 1 µm genau eingestellt werden kann.

Wie in den Figuren 2c und 2d ersichtlich, erstrecken sich die Schrauben durch das Federelement 241 hindurch bis in den Grundkörper 101. Durch das Hineinschrauben der Stellschrauben 242 und 243 in den Grundkörper wird das Sekundärteil 102 in Richtung des Grundkörpers bewegt, womit das Federelement 241 aus seiner Ausgangsposition gestaucht wird (siehe hierzu auch die schematische Darstellung in Fig. 2b).

Die gesamte Bewegungsamplitude des Sekundärteils 102 ist bevorzugt so gewählt, dass beim maximalen Hineindrehen der Schrauben 242 und 243 und damit bei minimalem Abstand des Sekundärteils 102 von dem Grundkörper 101 keine Zerstörung oder Beschädigung des Federelements 241 erfolgt. Besonders bevorzugt ist die Bewegungsamplitude so gewählt, dass sich das Federelement über die gesamte Bewegungsamplitude im Gültigkeitsbereich des Hookschen Gesetzes befindet, die vom Federelement bewirkte Kraft also proportional zur Stauchung der Feder ist.

Für ein mögliches Löseverhalten der Stellschrauben ist jedoch alternativ eine möglichst flache Kennlinie (z.B. degressiv) vorteilhaft. Davon umfasst sind alle degressiven Federkennlinien, deren Anstieg zumindest in einem Teilbereich der Kennlinie flacher als der einer Feder ist, die dem Hookschen Gesetz folgt. Dies hat den Vorteil, dass die Stellschraube über den gesamten Verstellbereich keinen signifikanten Vorspannkraftverlust erleidet und somit ein selbständiges Lösen unwahrscheinlich ist.

Kann die minimal erforderliche Vorspannkraft nicht eingehalten werden, sind Sicherungsmaßnahmen, wie Schraubenkleber usw., denkbar. Bevorzugt sind jedoch Sicherungselemente, die auch noch nach wiederholtem Verstellen eine ausreichende Sicherung darstellen (z.B. selbstsichernde HeliCoil-Einsätze).

Das Federelement kann als flächiger Körper, wie hier dargestellt, ausgebildet sein, kann jedoch auch als einzelne Feder vorgesehen sein. Insbesondere kommen Elemente wie Wellenfedern, klassische Druckfedern oder Tellerfedern und auch Bandstahl in Frage. Besonders bevorzugt, da eine Verteilung der Anpresskraft, die über die Schrauben auf das Sekundärteil 102 und damit auf das Federelement 241 übertragen wird, erreicht wird, sind Varianten aus elastischen und flächigen Materialien, wie beispielsweise Schaumstoff, Hartschaumstoff, Kautschuk oder Gummi. Werden mechanische Federn wie Druckfedern verwendet, können diese konzentrisch zu den Stellschrauben angeordnet sein, sodass die Stellschrauben durch die Federelemente hindurch verlaufen.

Figur 2c zeigt eine Ausführungsform, bei der die Stellschrauben oder das sich durch das Sekundärteil erstreckende Gewinde an der vom Grundkörper wegweisenden Fläche ein Dichtelement 245 umfassen, das ein Abdichten des Innenraums des Gewindes gegenüber der äußeren Umgebung gewährleistet. Da der Mover üblicherweise auch in Verbindung mit befüllten Behältern oder zumindest in Anwesenheit von Flüssigkeiten verwendet werden kann, kann so ein Korrodieren des Gewindes und damit eventuell erschwertes Hineinschrauben und Herausschrauben der Schrauben 242 und 243 verhindert werden.

Um unerwünschte Verunreinigungen noch besser zu verhindern, kann ferner vorgesehen sein, dass das Sekundärteil 102 und das Federelement 241 zwischen einem Teil des Grundkörpers 101 (beispielsweise in der dargestellten Ausbuchtung oder Mulde) und einer Abdeckung (auch Abdeckplatte genannt) 271 angeordnet sind, wobei die Abdeckung in Fig. 2d nur im Querschnitt dargestellt ist. Die Abdeckung erstreckt sich bevorzugt zumindest über die gesamte Fläche, die das Sekundärteil einnimmt und weist die dargestellten Öffnungen auf, durch die die Schrauben 242 und 243 eingelassen werden können, um die relative Lage des Sekundärteils 102 relativ zum Grundkörper 101 zu verändern. Auf diese Weise wird durch die Abdeckung 271 auch eine Begrenzung der Bewegungsamplitude des Sekundärteils 102 erreicht, da es sich nicht weiter als bis zur Abdeckung 271 bewegen kann. So kann auch sichergestellt werden, dass die Vorspannkraft des Federelements 241 immer noch ausreicht, um bei nicht eingesetzten Schrauben ein Vorspannen des Sekundärteils in einer definierten Position, nämlich in Anlage mit der Abdeckung 271 zu bewirken. Da erfindungsgemäß sehr dünne Abdeckungen mit einer Dicke von weniger als 1mm, bevorzugt 0,5mm oder weniger zum Einsatz kommen, sind jedoch den durch die Abdeckung 271 aufnehmbaren Kräften Grenzen gesetzt.

Wie in Fig. 2c können auch in Fig. 2d Dichtelemente vorgesehen sein. So können dieselben Dichtelemente der Fig. 2c auch in Fig. 2d zum Einsatz kommen. Alternativ oder zusätzlich können Dichtelemente vorgesehen sein, die ein Abdichten zwischen den Stellschrauben (insbesondere die Schraubenköpfe) und der Abdeckung (auch Abdeckplatte) 271 ermöglichen.

Die Abdeckung 271 kann auch derart vorgesehen sein, dass sie erst nach der Justage der oder des Sekundärteils aufgebracht wird und das Sekundärteil sowie die Stellschrauben vollständig einschließt, also nicht die Öffnungen aufweist, durch die die Stellschrauben 242, 243 geführt werden.

Alternativ oder zusätzlich können in einer Abdeckplatte gemäß jeder der beschriebene Ausführungsformen auch eine oder mehrere Öffnungen vorgesehen sein, durch die Schrauben oder andere Verbindungselemente geführt werden können, die eine Verbindung der Abdeckplatte mit dem Grundkörper des Movers erlauben. Anstelle von Schrauben können auch beispielsweise Klick-Verbindungen zum Einsatz kommen. Ferner kann vorgesehen sein, dass die Abdeckplatte ein sich im Wesentlichen um ihren ganzen Umfang (oder zumindest um einen Bereich der Abdeckplatte, der den Bereich, in den das Sekundärteil im Grundkörper eingelassen ist, umschließt) erstreckendes Dichtelement umfasst, dass ein Abdichten des unter der Abdeckplatte angeordneten Sekundärelements und damit auch des Hohlraums im Grundkörper gegenüber der Umgebung ermöglicht.

Wie anhand der Figur 2a ersichtlich, kann durch die Verwendung mehrerer Schrauben 242 und 243 bewirkt werden, dass das Sekundärteil 102 nicht nur bezüglich der in Figur 2a dargestellten Doppelpfeilrichtung ausgerichtet werden kann, sondern ferner die relative Lage bezüglich des Grundkörpers 101 auch in mehreren Raumrichtungen erfolgen kann. So kann durch Einschrauben der Schraube 242 um einer erste Strecke und das Einschrauben der Schraube 243 um eine zweite, von der ersten Strecke verschiedene Strecke, eine Schrägstellung des Sekundärteils erzielt werden. Dies kann beispielsweise Fehlstellungen der Rollmittel ausgleichen, sodass die Oberfläche des Sekundärteils trotz der "Schrägstellung" relativ zum Grundkörper letztlich parallel zur Oberfläche der Führungsschiene oder zu einer gedachten Oberfläche des Movers oder zu einer beliebigen anderen Fläche verläuft.

Durch Verwendung weiterer Schrauben, insbesondere vier Schrauben, wovon jede in den Ecken des in Figur 2a dargestellten Sekundärteils angeordnet sein kann, kann diese Möglichkeit der Einstellung der relativen Lage des Sekundärteils 102 zum Grundkörper noch verbessert werden. Es versteht sich, dass die in der Figur 2 lediglich mit Bezug auf das Sekundärteil 102 dargestellten Ausführungsformen auch für das zweite Sekundärteil 103 (siehe Figur 1) vorgesehen sein können. Hier kann eine vollständig separate Ausbildung der Einstellmittel für das zweite Sekundärteil mit einem Federelement und dazugehörigen Stellschrauben und Gewinden im Grundkörper, wie sie in den Figuren 2a bis 2d beschrieben wurden, vorgesehen sein. Alternativ kann auch vorgesehen sein, dass die Sekundärteile 102 und 103 zwar Ihnen jeweils zugeordnete Federelemente umfassen, jedoch lediglich eine Stellschraube oder eine Gruppe von Stellschrauben zum gemeinsamen Verstellen der Lage der Sekundärteile 102 und 103 bezüglich der Federelemente bzw. des Grundkörpers vorgesehen sind, wobei sich diese Stellschrauben dann durch beide Sekundärteile hindurch erstrecken können und durch geeignete Gewinde und Gegenhalter eine gemeinsame Verstellung der relativen Lage der Sekundärteile 102 und 103 bewirken können.

Alternativ kann auch vorgesehen sein, dass die Stellschrauben nicht wie dargestellt durch die Sekundärteile hindurch verlaufen, sondern ein Bewegen der Abdeckplatte bzw. Abdeckung 271 auf das Federelement 241 zu oder von diesem weg ermöglichen, sodass durch die Verstellung der Position der Abdeckplatte und die Vorspannkraft des Federelements 241 (analog dann auch für das weitere Sekundärteil 103 aus Figur 1) die relative Lage der Sekundärteile zum Grundkörper verändert wird.

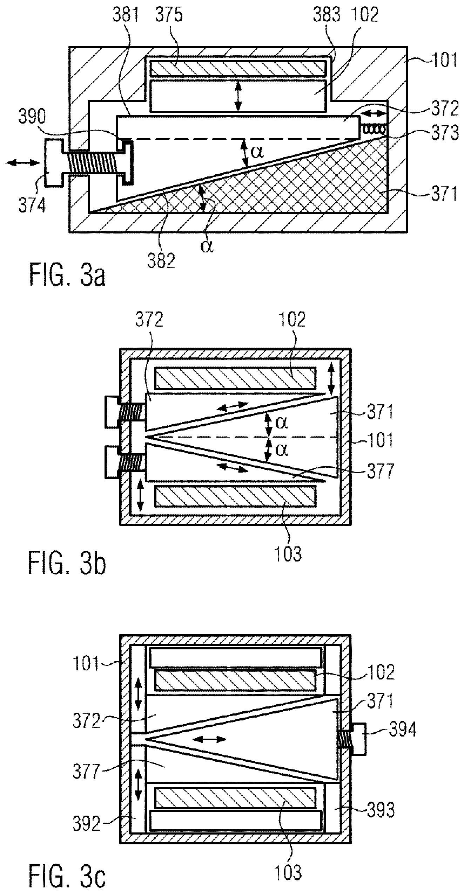

Die Figur 3a zeigt eine Ausführungsform und die Figuren 3b bis 3c zeigen nicht beanspruchte Beispiele, bei denen das Sekundärteil 102 auf einem Keil 372 gelagert ist, dessen Bewegung letztlich eine Veränderung der relativen Lage des Sekundärteils ermöglicht. In den Fig. 3a bis 3c wird der Grundkörper analog zu den Fig. 2a bis 2d in einem Querschnitt dargestellt, der senkrecht durch die Oberfläche des Sekundärteils aus Fig. 1 verläuft.

Der Keil 372 umfasst dazu eine im Wesentlichen plane Seite 381 und eine bezüglich dieser um einen Winkel α angeschrägte Seite 382. Während der Keil hier nur in einer Seitenansicht dargestellt ist, ist vorgesehen, dass sich dieser mit denselben Abmessungen aus der Bildebene hinaus erstreckt, sodass er die Form eines Polyeders mit trapezoidaler Grundfläche und rechteckigen, senkrecht auf der Grundfläche stehenden Seitenflächen aufweist, wobei die trapezoidale Grundfläche der hier dargestellten Fläche des Keils 372 entspricht. Es versteht sich, dass diese Ausführungsform lediglich beispielhaft ist und auch jede andere äußere Form des Keils, insbesondere auch unregelmäßige äußere Formen denkbar sind.

Im Grundkörper 101 ist ein weiterer Keil 371 vorgesehen, der ebenfalls eine um den Winkel α angeschrägte Fläche aufweist und auf dem der zweite Keile 372 entlang des dargestellten Doppelpfeils gleitfähig gelagert ist. Der Keil 371 (auch "erster Keil") ist gemäß der in Fig. 3a dargestellten Ausführungsform im Grundkörper unbeweglich angeordnet. Er kann mit dem Grundkörper auf geeignete Art verbunden sein (beispielweise Schrauben oder Steckverbindungen) oder einen Bestandteil des Grundkörpers bilden, sodass der Grundkörper bereits bei seiner Herstellung mit dem Keil 371 gebildet wird.

Weiterhin kann vorgesehen sein, dass auf der dem zweiten Keil 372 gegenüberliegenden Seite des Sekundärteils 102 ein Federelement 375 angeordnet ist, das die Bewegung des Sekundärteils 102 in dieser Richtung einschränkt. In einer nicht beanspruchten Alternative kann auch vorgesehen sein, dass das Sekundärteil 102 auf dem Keil 372 in einer Führung angeordnet ist, die lediglich eine Bewegung des Sekundärteils in einer Ebene ermöglicht, die senkrecht aus der dargestellten Bildebene heraus verläuft und parallel zur Fläche 381 des zweiten Keils ist. So wird sichergestellt, dass bei Bewegung des Keils 372 relativ zum Keil 371, die Bewegung des Sekundärteils sich nicht von der Bewegung des Keils 372 löst. Gleichzeitig kann durch Vorsehen einer Einbuchtung 383 in dem Grundkörper 101 und einer Anordnung des Sekundärteils 102 in diesem Bereich erreicht werden, dass eine resultierende Lageveränderung des Sekundärteils 102 bezüglich des Grundkörpers 101 nur in Richtung auf den Keil 371 zu oder von diesem weg möglich ist, wie dies durch den dargestellten Doppelpfeils angedeutet ist.

Um nun eine Bewegung des Sekundärteils in Richtung des dargestellten Doppelpfeils zu ermöglichen, wird der Keil 372 relativ zum Keil 371 bewegt. Dazu ist eine Stellschraube 374 vorgesehen, die in den Grundkörper 101 hinein geschraubt werden kann und den Keil 372 berührt, sodass ein Einschrauben der Stellschraube 374 zu einem Bewegen des Keils 372 entlang der angeschrägten Fläche des Keils 371 führt.

Um eine unbeabsichtigte Bewegung des Keils 372 zu vermeiden, kann dieser auf der der Schraube 374 gegenüberliegenden Seite durch ein Federelement 373 gegen die Schraube 374 vorgespannt werden. In einer nicht beanspruchten Alternative kann auch vorgesehen sein, dass zwei Stellschrauben vorgesehen sind, wobei die erste Stellschraube an der Position der Stellschraube 374 angeordnet ist und die weitere Stellschraube das Federelement 373 ersetzt. In einer nicht beanspruchten Alternative kann auch vorgesehen sein, dass kein Federelement 373 bereitgestellt ist, die Schraube aber stattdessen in einer Halterung 390 in dem Keil 372 derart fixiert ist, dass sie in dieser Halterung zwar gedreht werden kann, aber eine translatorische Bewegung der Stellschraube 374 relativ zum zweiten Keil 372 nicht möglich ist.

Alternativ kann sich das Gewinde auch im Keil 372 befinden. Im Gehäuse 101 ist dann die Halterung angeordnet, die eine Drehbewegung zulässt, aber eine translatorische Bewegung zwischen Gehäuse und Schraube verhindert.

In einer weiteren Alternative befindet sich das Gewinde ebenfalls im Keil 372. Das Federelement kann um die Schraube 374, zwischen Keil 372 und Grundkörper 101, positioniert werden. Dies ist zeichnerisch nicht dargestellt.

Bevorzugt erstrecken sich die sich berührenden Flächen der Keile 371 und 372 über eine Strecke, die länger ist als die Ausdehnung des Sekundärteils 102 in dieser Richtung. Insbesondere sollte die Länge l₃₈₁ der Strecke 381 bzw. die Breite der korrespondierenden Fläche, die gegeben ist über cosα * l₃₈₂ = l₃₈₁ 20% Prozent größer sein, als die daran anliegende Breite der Fläche des Sekundärteils 102 in dieser Richtung. So kann sicher gestellt werden, dass auch bei einer Bewegung des Keils 372 mit großer Amplitude das Sekundärteil 102 nicht am Keil 372 vorbei rutscht oder eine Schiefstellung des Sekundärteils 102 erfolgt. Da die maximale Bewegungsamplitude des Sekundärteils erneut im Millimeter oder im Submillimeterbereich liegt, sind die Anstellwinkel der Flächen bevorzugt im Bereich von einem Grad, besonders bevorzugt unter 0,5 Grad. Bei einem Anstellwinkel α=0,5 Grad bewirkt eine Bewegung des zweiten Keils 372 entlang der Fläche 382 um einen Zentimeter eine Höhenänderung des Sekundärteils 102 um 0,0087 Zentimeter, was bereits im Bereich einiger Mikrometer liegt, sodass die angestrebte Genauigkeit mit dieser Bewegungsamplitude erzielt werden kann.

Es ist jedoch ebenso denkbar, dass die Keile kürzer als die Sekundärteile sind.

Es versteht sich, dass für das zweite Sekundärteil 103 aus der Figur 101 eine ähnliche Vorrichtung vorgesehen sein kann, die vollständig von der für das Sekundärteil 102 in Figur 2a beschriebenen Vorrichtung separiert sein kann, sodass beide Sekundärteile 102 und 103 unabhängig voneinander eingestellt werden können.

Es kann jedoch, wie in Figur 3b beschrieben, auch vorgesehen sein, dass für das erste Sekundärteil 102 und das zweite Sekundärteil 103 zwar separate Keile 372 und 377 mit zugehörigen Stellschrauben vorgesehen sind, jedoch nur ein gemeinsamer erster Keil 371 fest im Grundkörper 101 angeordnet ist. In diesem Fall ist der Keil 371 auf beiden Seiten, die jeweils einen der Keile 372 und 377 berühren, mit einer angeschrägten Fläche versehen, die bezüglich der dargestellten gestrichelten Horizontalen einen Winkel α einschließt. Auf diese Weise müssen nicht zwei voneinander separierte "erste Keile" analog zum Keil 371 bereitgestellt werden und es kann Platz im Grundkörper gespart werden. Hinsichtlich der zur Verfügung stehenden Anstellwinkel ändert sich in dieser Ausführungsform nichts.

Figur 3c zeigt eine Alternative, bei der der gemeinsame Keil 371 über eine Stellschraube 394 bezüglich des Grundkörpers 101 beweglich gelagert ist. Wird der Keil 371 in Richtung der hier dargestellten Spitze des Keils 371 getrieben (durch ein entsprechendes Drehen der Stellschraube), werden die Keile 372 und 377 nach oben bzw. nach unten in den vorgesehenen Führungen 392 und 393 bewegt, sodass die Sekundärteile 102 und 103 nach außen bewegt werden (in Fig. 3c nach oben bzw. nach unten). Die Positionen Sekundärteile 102 und 103 kann so synchron zueinander eingestellt werden und gleichzeitig mit hoher Genauigkeit erfolgen.

Während die Fig. 3a bis 3c für jedes Sekundärteil 102 und 103 nur jeweils einen zweiten Keil 372 bzw. 373 vorsahen, kann auch vorgesehen sein, dass für jedes der Sekundärteile mehrere Keile bereitgestellt sind, die in einer Richtung senkrecht zur Bildebene angeordnet sind. Diese können bevorzugt unabhängig voneinander bewegt werden, sodass mit dieser Ausführungsform auch eine Schrägstellung des entsprechenden Sekundärteils analog zu der Beschreibung der Ausführungsformen in Fig. 2a bis 2d möglich wird.

Obwohl nicht im Detail beschrieben, kann auch in den in Fig. 3a bis 3c vorgesehen sein, dass eine Abdeckung des Sekundärteils analog zu der Abdeckung bzw. Abdeckplatte 271 gemäß der Fig. 2d vorgesehen ist. Werden im Bereich der Stellschrauben noch Dichtringe und korrespondierende Dichtflächen vorgesehen, handelt es sich um ein System, bei dem das Sekundärteil 102 vollkommen gekapselt ist, aber trotzdem spätere Korrekturen an den Stellschrauben durchgeführt werden können.

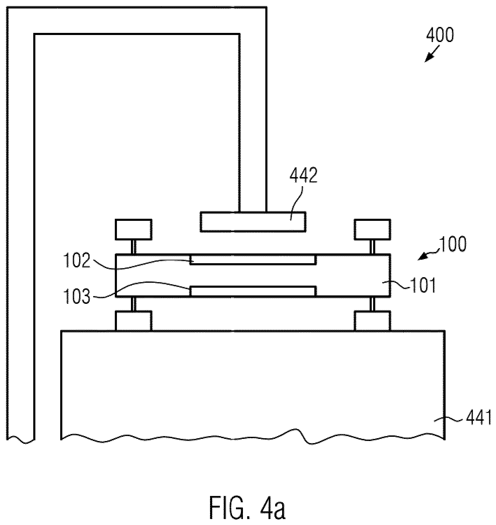

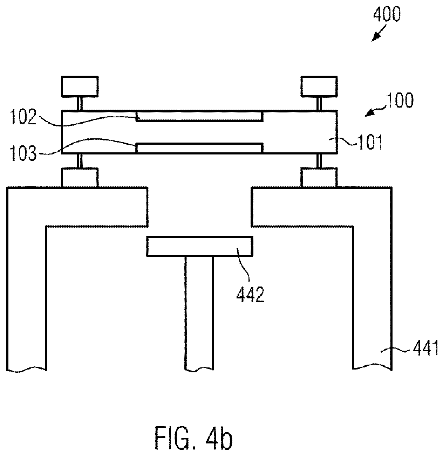

Figuren 4a und b zeigen Ausführungsformen, in denen die Einstellung der relativen Lage der Sekundärteile 102 und 103 bezüglich des Grundkörpers 101 in einer Kraftmessvorrichtung 400 erfolgt. Die Kraftmessvorrichtung wird in beiden Fällen im Wesentlichen gebildet durch einen Auflagetisch 441 und einen (beweglichen) Kraftmesser 442, an dessen einem Ende, das in Richtung des Auflagetisches 471 weist, ein Magnet oder Elektromagnet angeordnet sein kann. In der dargestellten Ausführungsform in Fig. 4a wird der Mover 100 auf dem Auflagetisch 441 derart positioniert, dass eines der Sekundärteile 102 von der Oberfläche des Auflagetisches 441 weg weist, während das andere Sekundärteil 103 zur Oberfläche des Auflagetisches hin zeigt. Die dargestellte Situation betrifft die Einstellung der Lage des Sekundärteils 102, weshalb im Folgenden nur noch von diesem Sekundärteil die Rede sein wird. Es versteht sich, dass ein analoges Verfahren auch bei Umdrehen des Movers 100 derart, dass die Sekundärteile 102 und 103 die Positionen tauschen, durchgeführt werden kann. Ist nur ein Sekundärteil vorgesehen, so muss ein Umdrehen des Movers nicht erfolgen. Es kann allerdings vorteilhaft sein, auch bei Vorsehen nur eines einzigen Sekundärteils, beispielsweise Sekundärteil 102, den Mover zu drehen und die auf gegenüberliegende Flächen des Sekundärteils einwirkenden Kräfte zu messen. Hiermit können ggf. Fehlerquellen, die abhängig von der Auflageseite des Movers auf dem Auflagetisch 471 sind, erkannt und kompensiert werden.

In einer alternativen aber bevorzugten Variante wird der Kraftmesser 442, der fest mit einem ferromagnetischen Material verbunden ist, unterhalb des Movers 100 platziert, sodass die Moverrollen durch die Magnetkraft gegen den Auflagetisch 441 gezogen werden. Zusätzliche Mittel zum Vermeiden eines Anhebens des Movers vom Auflagetisch sind damit unnötig. Ferner entfällt mit dieser Anordnung die Notwendigkeit einer Hubbewegung des Kraftmessers 442. Diese Ausführungsform ist in Fig. 4b dargestellt.

In der Ausgangssituation des Kraftmessverfahrens befindet sich das Sekundärteil 102 in einer "Ausgangslage", die als eine im Wesentlichen beliebige Lage im Grundkörper angesehen werden kann und die gegebenenfalls der Einstellung bedarf, sodass ein Abstand des Sekundärteils zum Grundkörper 101 bzw. damit auch der Abstand des Sekundärteils 102 zu einer Führungsschiene 190, wie sie in Figur 1 beschrieben wurde, einzustellen ist.

Um zu ermitteln, ob eine solche Einstellung notwendig ist, wird der Kraftmesser 442 auf den Mover zu, also in Richtung des Auflagetisches bewegt. Das Sekundärelement 102 und ein in dem Kraftmesser 442 verbauter (Elektro-)Magnet (anstelle des Elektromagneten kann auch ein magnetisierbares und/oder ferromagnetisches Material, insbesondere ein Eisenstück verwendet werden) wechselwirken miteinander, sodass durch einen geeigneten Kraftmesser in der Vorrichtung die auf den Elektromagneten einwirkende Kraft gemessen werden kann. Gleichzeitig kann die Position des Elektromagneten relativ zum Auflagetisch mit hoher Genauigkeit (bevorzugt im Mikrometerbereich) bestimmt und eingestellt werden. Dazu wird die Kraft zwischen dem Sekundärteil 102 und dem auf dem Kraftmesser befindlichen (Elektro-)Magneten oder magnetisierbarem und/oder ferromagnetischem Material gemessen und auf einen Vorgabewert eingestellt.

Ist die gemessene Kraft zu gering, so ist auch die auf das Sekundärteil 102 gemessene Kraft geringer als der gewünschte Wert und das Sekundärteil 102 ist zu weit von dem Elektromagneten entfernt, sodass mit Hilfe der in Bezug auf die Figuren 1 bis 3 beschriebenen Mittel zum Einstellen der relativen Lage des Sekundärteils 102 die relative Lage des Sekundärteils 102 bezüglich des Grundkörpers verändert werden kann und dieses Sekundärteil vom Grundkörper weiter entfernt werden kann, so dass es näher an den Elektromagneten geführt wird.

Im anderen Fall, in dem die auf den Elektromagneten einwirkende Kraft größer ist als ein gewünschter Wert, wird das Sekundärteil 102 weiter in den Grundkörper 101 hinein bewegt, sodass sich der Abstand zum Elektromagneten vergrößert und die einwirkende Kraft sinkt, bis der gewünschte Wert erreicht ist.

Dies kann dann ebenfalls mit dem Sekundärteil 103 durchgeführt werden oder, wenn die Bewegung der Sekundärteile relativ zum Grundkörper gekoppelt ist, bereits eine Einstellung des Sekundärteils erfolgt sein. Anschließend sind die Sekundärteile so im Grundkörper positioniert, dass der Abstand bzw. die Kräfte der Sekundärteile zur Führungsschiene 190 in der Figur 1, wenn der Mover an der Führungsschiene angeordnet ist, genau den gewünschten Wert aufweist und somit die Funktionalität, wie eine reproduzierbare Weichenauslösung, gewährleistet wird.

Neben dieser kraftbasieren Variante gibt es auch eine geometriebasierte Variante, bei der die Position des Sekundärteils relativ zu einer Referenzebene, die bevorzugt zu den Rollenkontaktpunkten mit der Auflagefläche 441 verläuft, gemessen wird, um eine Vorgabe für den Spalt einzustellen.

## Patentansprüche

1. Mover (100) für eine Transportvorrichtung in der getränkeverarbeitenden Industrie, der Verpackungsindustrie oder der Lagerindustrie, wobei der Mover zusammen mit einer Führungsschiene (190) und einem Langstator (180) der Transportvorrichtung einen Linearantrieb bilden kann und der Mover Rollmittel (150) zum Bewegen entlang der Führungsschiene umfasst, wobei der Mover einen Grundkörper (101) und zwei Sekundärteile (102, 103) umfasst, die an gegenüberliegenden Seiten des Grundkörpers angeordnet sind und geeignet sind, zum Antrieb des Movers entlang der Führungsschiene mit einem von der Transportvorrichtung erzeugten elektromagnetischen Feld zu wechselwirken, **dadurch gekennzeichnet, dass** der Mover (100) Mittel (121, 131) zur stufenlosen Einstellung der relativen Lage eines Sekundärteils (102, 103) zum Grundkörper (101) umfasst, wobei erste Mittel zur Einstellung der relativen Lage eines ersten Sekundärteils (102) zum Grundkörper (101) und zweite Mittel zur Einstellung der relativen Lage eines zweiten Sekundärteils (103) zum Grundkörper (101) vorgesehen sind oder Mittel zur gemeinsamen Einstellung der relativen Lage des ersten und zweiten Sekundärteils zum Grundkörper vorgesehen sind;
wobei die Mittel ein Federelement (241) umfassen, das ein Sekundärteil (102, 103) in einer Ausgangslage und in einer Richtung bezüglich des Grundkörpers (101) vorspannt und die Mittel weiterhin eine Stellschraube (242, 243) in einem Gewinde (261, 262) umfassen, wobei durch ein Stellen der Stellschraube die Lage des Sekundärteils (102, 103) entlang der Richtung eingestellt werden kann.

2. Mover (100) nach Anspruch 1, wobei eine Vorspannkraft des Federelements kleiner oder höchstens gleich einer Haftreibungskraft zwischen der Stellschraube und dem Gewinde ist.

3. Mover (100) nach Anspruch 1, wobei die Stellschraube und/oder das Gewinde ein Dichtelement umfasst.

4. Mover (100) nach Anspruch 3, wobei das Dichtelement das Gewinde und/oder die Stellschraube gegen eine Abdeckung (271) abdichtet.

5. Mover (100) nach einem der Ansprüche 1 bis 4, wobei die zwei Sekundärteile (102, 103) und die Mittel zur stufenlosen Einstellung der relativen Lage jedes Sekundärteils in einem durch den Grundkörper und eine Abdeckung (271) gebildeten Gehäuse angeordnet sind.

6. Verfahren zum Einstellen der relativen Lage von Sekundärteilen eines Movers (100) für eine Transportvorrichtung in der getränkeverarbeitenden Industrie, der Verpackungsindustrie oder der Lagerindustrie, wobei der Mover zusammen mit einer Führungsschiene (190) und einem Langstator (180) der Transportvorrichtung einen Linearantrieb bilden kann und der Mover Rollmittel (150) zum Bewegen entlang der Führungsschiene umfasst, wobei, die Sekundärteile (102, 103) an gegenüberliegenden Seiten eines Grundkörpers (101) des Movers angeordnet sind und geeignet sind, zum Antrieb des Movers entlang der Führungsschiene mit einem von der Transportvorrichtung erzeugten elektromagnetischen Feld zu wechselwirken, wobei das Verfahren **dadurch gekennzeichnet ist, dass** die relative Lage eines Sekundärteils (102, 103) zum Grundkörper (101) stufenlos mit am Mover angeordneten Mitteln (121, 131) eingestellt wird, wobei die relative Lage eines ersten und/oder zweiten Sekundärteils (102, 103) zum Grundkörper (101) unabhängig voneinander durch dem ersten Sekundärteil zugeordnete erste Mittel und/oder dem zweiten Sekundärteil zugeordnete zweite Mittel eingestellt wird oder wobei die relative Lage des ersten und/oder zweiten Sekundärteils zum Grundkörper durch ein Mittel zur gemeinsamen Einstellung eingestellt wird;
wobei die Mittel eine Stellschraube in einem Gewinde und ein Federelement, das ein Sekundärteil (102, 103) direkt oder indirekt in eine Ausgangslage relativ zum Grundkörper (101) vorspannt, umfassen und zum Einstellen der relativen Lage die Stellschraube in dem Gewinde gedreht wird, sodass eine Bewegung des Sekundärteils erfolgt.

7. Verfahren nach Anspruch 6, wobei über eine gesamte Einstellstrecke der Stellschraube die Vorspannkraft des Federelements geringer ist, als die Haftreibungskraft zwischen dem Gewinde und der Stellschraube.

8. Verfahren nach einem der Ansprüche 6 oder 7, wobei das Einstellen der relativen Lage jedes Sekundärteils in einer Kraftmessvorrichtung (400) erfolgt, in der weiterhin eine auf jedes Sekundärteil (102, 103) im Mover (100) wirkende, elektromagnetische Kraft gemessen wird.

## Claims

1. Mover (100) for a transport device in the beverage processing industry, the packaging industry, or the warehousing industry, wherein the mover, together with a guide rail (190) and a long stator (180) of the transport device, can form a linear drive, and the mover comprises rolling means (150) for moving along the guide rail, wherein the mover comprises a base body (101) and two secondary parts (102, 103) which are arranged on opposite sides of the base body and are suitable for interacting with an electromagnetic field generated by the transport device to drive the mover along the guide rail, **characterized in that** the mover (100) comprises means (121, 131) for continuously adjusting the relative position of a secondary part (102, 103) to the base body (101), wherein first means for adjusting the relative position of a first secondary part (102) relative to the base body (101) and second means for adjusting the relative position of a second secondary part (103) relative to the base body (101) are provided, or means for jointly adjusting the relative position of the first and second secondary parts relative to the base body are provided;
wherein the means comprise a spring element (241) which biases a secondary part (102, 103) in a starting position and in a direction relative to the base body (101), and the means further comprise an adjusting screw (242, 243) in a thread (261, 262), wherein the position of the secondary part (102, 103) can be adjusted along the direction by adjusting the adjusting screw.

2. Mover (100) according to claim 1, wherein a preload force of the spring element is less than or at most equal to a static friction force between the adjusting screw and the thread.

3. Mover (100) according to claim 1, wherein the adjusting screw and/or the thread comprises a sealing element.

4. Mover (100) according to claim 3, wherein the sealing element seals the thread and/or the adjusting screw against a cover (271).

5. Mover (100) according to any one of claims 1 to 4, wherein the two secondary parts (102, 103) and the means for continuously adjusting the relative position of each secondary part are arranged in a housing formed by the base body and a cover (271).

6. Method for adjusting the relative position of secondary parts of a mover (100) for a transport device in the beverage processing industry, the packaging industry or the storage industry, wherein the mover, together with a guide rail (190) and a long stator (180) of the transport device, can form a linear drive and the mover comprises rolling means (150) for moving along the guide rail, wherein the secondary parts (102, 103) are arranged on opposite sides of a base body (101) of the mover and are suitable for interacting with an electromagnetic field generated by the transport device to drive the mover along the guide rail, wherein the method is **characterized in that** the relative position of a secondary part (102, 103) relative to the base body (101) is continuously adjusted by means (121, 131) arranged on the mover, wherein the relative position of a first and/or second secondary part (102, 103) relative to the base body (101) is adjusted independently of each other by first means assigned to the first secondary part and/or second means assigned to the second secondary part, or wherein the relative position of the first and/or second secondary part relative to the base body is adjusted by means for joint adjustment;
wherein the means comprise an adjusting screw in a thread and a spring element which directly or indirectly biases a secondary part (102, 103) into an initial position relative to the base body (101), and wherein, to adjust the relative position, the adjusting screw is rotated in the thread so that the secondary part moves.

7. Method according to claim 6, wherein over the entire adjustment range of the adjusting screw, the preload force of the spring element is less than the static friction force between the thread and the adjusting screw.

8. Method according to one of claims 6 or 7, wherein the relative position of each secondary part is adjusted in a force measuring device (400), in which an electromagnetic force acting on each secondary part (102, 103) in the mover (100) is also measured.

## Revendications

1. Dispositif de déplacement (100) pour un dispositif de transport dans l'industrie de transformation des boissons, l'industrie de l'emballage ou l'industrie du stockage, dans lequel le dispositif de déplacement, conjointement à un rail de guidage (190) et à un stator long (180) du dispositif de transport, peut former un entraînement linéaire et le dispositif de déplacement comprend des moyens de roulement (150) pour se déplacer le long du rail de guidage, dans lequel le dispositif de déplacement comprend un corps de base (101) et deux parties secondaires (102, 103) qui sont agencées sur les côtés opposés du corps de base et sont adaptées pour interagir avec un champ électromagnétique généré par le dispositif de transport afin d'entraîner le dispositif de déplacement le long du rail de guidage, **caractérisé en ce que** le dispositif de déplacement (100) comprend des moyens (121, 131) pour ajuster en continu la position relative d'une partie secondaire (102, 103) par rapport au corps de base (101), dans lequel des premiers moyens sont pourvus pour ajuster la position relative d'une première partie secondaire (102) par rapport au corps de base (101) et des deuxièmes moyens sont pourvus pour ajuster la position relative d'une deuxième partie secondaire (103) par rapport au corps de base (101), ou des moyens sont pourvus pour ajuster conjointement la position relative des première et deuxième parties secondaires par rapport au corps de base ;
dans lequel lesdits moyens comprennent un élément de ressort (241) qui précontraint une partie secondaire (102, 103) dans une position initiale et dans une direction par rapport au corps de base (101), et lesdits moyens comprennent en outre une vis de réglage (242, 243) dans un filetage (261, 262), dans lequel la position de la partie secondaire (102, 103) le long de ladite direction peut être réglée en ajustant la vis de réglage.

2. Dispositif de déplacement (100) selon la revendication 1, dans lequel une force de précharge de l'élément de ressort est inférieure ou égale à une force de frottement statique entre la vis de réglage et le filetage.

3. Dispositif de déplacement (100) selon la revendication 1, dans lequel la vis de réglage et/ou le filetage comprennent un élément d'étanchéité.

4. Dispositif de déplacement (100) selon la revendication 3, dans lequel l'élément d'étanchéité scelle le filetage et/ou la vis de réglage contre un couvercle (271).

5. Dispositif de déplacement (100) selon l'une des revendications 1 à 4, dans lequel les deux parties secondaires (102, 103) et les moyens de réglage en continu de la position relative de chaque partie secondaire sont agencés dans un boîtier formé par le corps de base et un couvercle (271).

6. Procédé de réglage de la position relative de parties secondaires d'un dispositif de déplacement (100) pour un dispositif de transport dans l'industrie de transformation des boissons, l'industrie de l'emballage ou l'industrie du stockage, dans lequel le dispositif de déplacement, conjointement à un rail de guidage (190) et à un stator long (180) du dispositif de transport, peut former un entraînement linéaire, et le dispositif de déplacement comprend des moyens de roulement (150) pour se déplacer le long du rail de guidage, dans lequel les parties secondaires (102, 103) sont agencées sur les côtés opposés d'un corps de base (101) du dispositif de déplacement et sont adaptées pour interagir avec un champ électromagnétique généré par le dispositif de transport afin d'entraîner le dispositif de déplacement le long du rail de guidage, dans lequel le procédé est **caractérisé en ce que** la position relative d'une partie secondaire (102, 103) par rapport au corps de base (101) est réglée en continu par des moyens (121, 131) agencés sur le dispositif de déplacement, dans lequel la position relative d'une première partie secondaire et/ou la position relative d'une deuxième partie secondaire (102, 103) par rapport au corps de base (101) sont réglées indépendamment l'une de l'autre par des premiers moyens associés à la première partie secondaire et/ou par des deuxièmes moyens associés à la deuxième partie secondaire, ou dans lequel la position relative de la première partie secondaire et/ou de la deuxième partie secondaire par rapport au corps de base est ajustée par un moyen de réglage conjoint ;
dans lequel les moyens comprennent une vis de réglage dans un filetage et un élément de ressort qui précharge une partie secondaire (102, 103) directement ou indirectement dans une position initiale par rapport au corps de base (101), et pour régler la position relative, la vis de réglage est vissée dans le filetage de manière à produire un déplacement de la partie secondaire.

7. Procédé selon la revendication 6, dans lequel, sur toute la distance de réglage de la vis de réglage, la force de précharge de l'élément de ressort est inférieure à la force de frottement statique entre le filetage et la vis de réglage.

8. Procédé selon l'une des revendications 6 et 7, dans lequel le réglage de la position relative de chaque partie secondaire s'effectue dans un dispositif de mesure de force (400) où est mesurée en outre une force électromagnétique agissant sur chaque partie secondaire (102, 103) dans le dispositif de déplacement (100).
